**Europäisches Patentamt**

**European Patent Office**

**Office européen des brevets**

(19)

(11) Publication number : **0 366 402 B1**

(12)

# EUROPEAN PATENT SPECIFICATION

(45) Date of publication of patent specification :
09.08.95 Bulletin 95/32

(51) Int. Cl.⁶ : **H04N 5/92, H04N 9/79**

(21) Application number : **89310930.6**

(22) Date of filing : **24.10.89**

(54) **Digital audio signal recording/reproducing method and apparatus for carrying out the same.**

(30) Priority : **25.10.88 JP 268446/88**

(43) Date of publication of application :
**02.05.90 Bulletin 90/18**

(45) Publication of the grant of the patent :
**09.08.95 Bulletin 95/32**

(84) Designated Contracting States :
**DE FR GB NL**

(56) References cited :
EP-A- 0 129 324
EP-A- 0 222 386
EP-A- 0 276 809
US-A- 4 233 627
US-A- 4 710 826
US-A- 4 717 972

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **Yamaguchi, Susumu**
**258-1208, Yagumohigashimachi-2-chome**
**Moriguchi-shi (JP)**

(74) Representative : **Smith, Norman Ian et al**
**F.J. CLEVELAND & COMPANY**
**40-43 Chancery Lane**
**London WC2A 1JQ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 366 402 B1

## Description

BACKGROUND OF THE INVENTION

1. Field of the Invention

The present invention relates generally to a digital signal recording and/or reproducing method. More particularly, the invention is concerned with a signal processing method for recording and/or reproducing a digital audio signal together with a video signal by using a video cassette recorder of a rotary head type.

2. Description of the Related Art

In recent years, remarkable progress has been made in the field of the digital audio recording technique for recording and reproducing audio signal by resorting to digitization, i.e. a so-called PCM (Pulse Code Modulation) recording technique.

As the typical ones of the digital audio signal recording systems, there can be mentioned a CD (Compact Disc) system and a R-DAT (Rotary-Head Digital Audio Taperecorder) system. For particulars of the CD system and the R-DAT system, reference may be made to, for example, (1) "Compact disc digital audio system": IEC (International Electrotechnical Commission) Standard Publication 903 (1987) and (2) The DAT Conference Standard, "Digital Audio Taperecorder System", 1987, 6, The DAT Conference, respectively.

Similarly, in the field of the VCR (Video Cassette Recorder) technique for recording the video signal together with the audio signal, numerous approaches and attempts have been made in an effort to enhance the sound quality. As one of the means adopted to this end, there has been developed an audio signal FM (Frequency Modulation) recording system. In reality, this recording system is now widespread over the world and popularized as the rotaty head type high fidelity VCR.

In order to further improve the sound quality in the audio signal recording, it is naturally expected that the FM recording system has to offer its place to the PCM recording, i.e. the digital audio recording system. In actuality, there is already known a system for recording the digitized audio signal. It is what is called the 8-mm VCR system (see, for example, "Helical-scan video tape cassette system using 8-mm magnetic tape-Video 8": IEC Standard Publication 843, (1987)).

It is however noted that the approach for recording and reproducing the digital audio signal of high quality together with video signal, inclusive of the 8-mm VCR system, encounters two problems in the large.

The first problem can be seen in the sampling frequency employed for converting the audio signal from the analogue to digital signal (A/D conversion). Heretofore, such a frequency as bears a synchronous relation to the video signal has frequently been used as the sampling frequency with a view to facilitate the signal processing. By way of example, in the case of the 8-mm VCR, such frequency which is twice as high as the horizontal synchronizing frequency ($f_H$; 31.5 KHz in the NTSC system and 31.25 KHz in the CCIR system) is employed. In this case, no problem will arise when the VCR incorporates an A/D converter for realizing the digitization of the audio internally of the VCR itself.

However, in view of the fact that digital audio interface for allowing the signal transmission among audio apparatuses in the very form of the digital signal comes to be standardized as the result of progress toward systematization of the digital audio apparatuses in these years (refer to, for example, "Digital Audio Interface": The Japanese Electromechanical Engineering Society Standards, CP-340, Sept. 1987), it is required that even the audio part of the VCR should have an expandability as the digital audio apparatus and have to comply with the standards concerning the sampling frequency, the quantizing bit number and others of the VCR. In this conjunction, it is noted that the digital audio signal supplied externally is independent of the video signal and no synchronism exists between them.

The second problem is seen in the signal recording format. More specifically, when the digital audio signal is recorded and reproduced on and from a recording medium such as a magnetic tape or the like, occurrence of dropout phenomenon of reproduced data due to some fault or detect of the recording medium is inevitable. Under the circumstance, the digital audio signal recording is performed by adding redundant data called the error correction code to the intrinsic audio data for coping with the dropout event. Further, for the dropout of burst nature which is beyond the correcting ability of the error correction code, a data dispersing procedure referred to as interleave is adopted for converting the burst errors making appearance in succession into errors of random nature, which are then corrected or concealed with the aid of the error correction code to thereby dispose of the dropout of the burst nature.

Concerning the types of the error correction codes and addition thereof as well as the interleave, there are proposed a variety of methods.

As a method of interleave, a block-completed interleave is generally adopted in the rotary-head type recording/reproducing system, as can be seen in the 8-mm VCR and the R-DAT system. According to the block-completed interleave method, the digital audio signal is segmented or divided into blocks under the timing synchronized with the change-over of the rotary heads, whereon the digital audio signal is rearrayed or rearranged within each block.

Concerning the addition of the error correction code, there are known two methods, i.e. a method of disposing plural kinds of error correction codes in oblique directions differing one another within the interleave format as in the case of the 8-mm VCR and a method of disposing two types of error correction codes also referred to as the product codes orthogonally to each other in the horizontal and vertical directions, as in the case of the R-DAT system. In general, the second mentioned method is advantageous in respect to the error correcting ability of the error correction code when considered in comparison with the redundancy thereof as involved.

In the recording of the digital audio signal by using the rotary heads, it is possible to control the rotational frequency of the rotaty cylinder carrying the rotary heads with reference to the sampling frequency of the audio signal when only the audio signal is to be recorded, as in the case of the R-DAT system. However, when the digital audio signal is to be recorded together with the video signal, as in the case of the 8-mm VCR, the rotary cylinder is rotated with reference to the video signal since greater importance is put to the video signal rather than the audio signal. In this case, neither the frame frequency nor the field frequency of the video signal bears any synchronous relation to the sampling frequency of the audio signal, as pointed out in conjunction with the first problem mentioned above. As the result, the number of the audio data contained within each of the blocks generated periodically upon every switching of the rotary head may vary from one to another block.

As is well known in the art, there are available generally two species of video signals, one for the 525-line/60-field system represented by the NTSC system and the other for the 625-line/50-field system typified by the CCIR system such as PAL, SECAM and other systems. Besides, two rotational frequencies of the rotary head are available. They are 60 Hz and 50 Hz. Heretofore, in the case of the 8-mm VCR, two types of recording formats are adopted which are identical in respect to the code structure for both of the above-mentioned television systems (NTSC and CCIR systems) and which are irrelevant to each other in respect to the interleave. In this connection, it is noted that the methods mentioned above do not suffer from any noticeable problems so long as the code structure or configuration is simple.

However, attempt for making available in the 8-mm VCR as well the product codes which are excellent in the error correcting ability will require extremely complicated processing and can not ensure general applicability so far as the code structure and the interleave method can not be shared in common between the two types of the television systems mentioned above.

EP-A-0222386 describes a recording and reproducing method for audio signals in which PCM audio signals are sectioned into blocks and error correction codes $C_1$ and $C_2$ are recorded with the blocks.

EP-A-129324 describes error codes for use with digitally recorded data.

It is an object of the present invention to provide a digital audio signal recording/reproducing method having an improved and enhanced capability of correcting the error of the digital audio signal having matchability with the standard digital audio interface without sacrificing the common features of the different television systems for the video signals.

According to a first aspect of the present invention there is provided a rotary-head type digital audio signal recording method for recording a digital audio signal sampled at a predetermined sampling frequency together with a video signal by using rotary head means, comprising the steps of:

(a) segmenting the digital audio signal by a field period of the video signal into a predetermined number of data each constituting one processing unit;

(b) arraying sampled data of the digital audio signal of the processing unit in a three-dimensional space including M samples in the vertical direction, N samples in the horizontal direction and either 5 or 6 samples in the depthwise direction depending upon whether the television system is a 525 line-60 field system or a 625 line-50 field system, where M and N represent positive integers; and

(c) generating a first error correction code from the data of the vertical direction while generating a second error correction code from the data of the horizontal direction and disposing said first correction codes at a rear position of the data sequence along a first axis and disposing said second error correction codes at a mid position of the data sequence along a second axis perpendicular to the first axis, and said method being characterised by:

(d) reading said sampled data and first and second error correction codes, such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order, to thereby record the sampled data as read out on a recording medium together with the video signal of one field.

According to a second aspect of the present invention there is provided a rotary-head type digital audio signal reproducing method for reproducing a digital audio signal sampled at a predetermined sampling frequency and recorded together with a video signal, comprising the steps of:

(a) reading the sampled data of the digital audio signal recorded on a recording medium along with first and second error correction codes; and

(b) arraying the sampled data of the digital audio signal as read out in a three-dimensional space including M samples (M is a positive integer) in a horizontal direction, N samples (N is a positive integer) in a vertical direction, and either 5 or 6 samples in the depthwise direction depending upon whether the television system is a 525 line-60 field system or a 625 line-50 field system, where M and N represent positive integers; and

said method being characterised by:

(c) reading said sampled data and first and second error correction codes, such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order,

said method being further characterised by:

(d) performing error correction/concealment on the sampled data of the digital audio signal with the first and second error correction codes to thereby reproduce the original audio signal.

According to a third aspect of the present invention there is provided a rotary-head type digital audio signal recording/reproducing medium for recording/reproducing a digital audio signal sampled at a predetermined sampling frequency together with a video signal by using rotary head means, comprising steps of:

(a) segmenting the digital audio signal by a field period of the video signal into a predetermined number of data constituting one processing unit;

(b) preparing as data capacities of the one processing unit a first mode (mode 1) having a greater capacity than the average sample number of said digital audio signal within one field period of said video signal and a second mode (mode 2) having a smaller capacity than said average sample number;

(c) synchronizing said digital audio signal with said video signal by changing over said first and second modes to each other in dependence on the rotational periods of said rotary head means; and

(d) arraying the sampled data of said digital audio signal of the one processing unit in a three-dimensional space including M sample (M is a positive integer) in the vertical direction, N samples (N is a positive integer) in the horizontal direction and either 5 or 6 samples in the depthwise direction depending on whether the television system is a 525 line-60 field system or a 625 line-50 field system, and

(e) generating a first error correction code from the data of the vertical direction while generating a second error correction code from the data of the horizontal direction and disposing said first correction codes at a rear position of the data sequence along a first axis and disposing said second error correction codes at a mid position of the data sequence along a second axis perpendicular to the first axis, and said method being characterised by:

(f) reading said sampled data and first and second error correction codes, such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order, to thereby record the sampled data as read out on a recording medium together with the video signal of one field.

According to a fourth aspect of the present invention there is provided a digital audio signal recording apparatus for recording a digital audio signal together with a video signal comprising:

means for segmenting the digital audio signal inputted consecutively by a field period of the video signal;

means for arraying sampled data of the digital audio signals resulting from said division in an address space including M samples (M is a positive integer) in the vertical direction, N samples (N is a positive integer) in the horizontal direction and either 5 or 6 samples in the depthwise direction depending upon whether the television system is a 525 line-60 field system or a 625 line-50 field system; and,

means for generating a first error correction code from the data arrayed in the vertical direction of said address space by said means while generating a second error correction code from the data arrayed in the horizontal direction and disposing said first error correction codes at a rear position of the data sequence along a first axis and disposing said second error codes at a mid position of the data sequence along a second axis perpendicular to the first axis, and characterised by:

4

EP 0 366 402 B1

means for reading said sampled data and said first and second error correction codes from said address space such that the sampled data of the digital audio signal inputted on the time serial basis are written sequentially in the depthwise direction, in the horizontal direction and in the vertical direction in this order, while the reading of the data is performed sequentially in the vertical direction, in the depthwise direction and in the horizontal direction in this order, whereby the sampled data and the first and second correction signals can be recorded on the recording medium together with the video signal of one field.

BRIEF DESCRIPTION OF THE DRAWINGS

Fig. 1 is a block diagram showing a general arrangement of a VCR designed for carrying out the digital audio signal recording/reproducing method according to an exemplary embodiment of the present invention;
Fig. 2 is a plan view showing the state of a rotary head cylinder wrapped by a magnetic tape;
Fig. 3 is a track pattern diagram for illustrating a recording pattern on the tape;
Fig. 4 is a schematic diagram for illustrating rearrangement of sampled data of a digital audio signal in a three-dimensional space;
Figs. 5(a) to 5(d) are views showing formats of the sampled data of the digital audio signal resulting from the data rearrangement processing illustrated in Fig. 4; and
Figs. 6(a) and 6(b) show interleave formats for illustrating data arrays in the NTSC and CCIR television systems, respectively.

DESCRIPTION OF THE PREFERRED EMBODIMENT

Now, the digital audio signal recording/reproducing method according to the present invention will be described in detail by reference to the accompanying drawings.

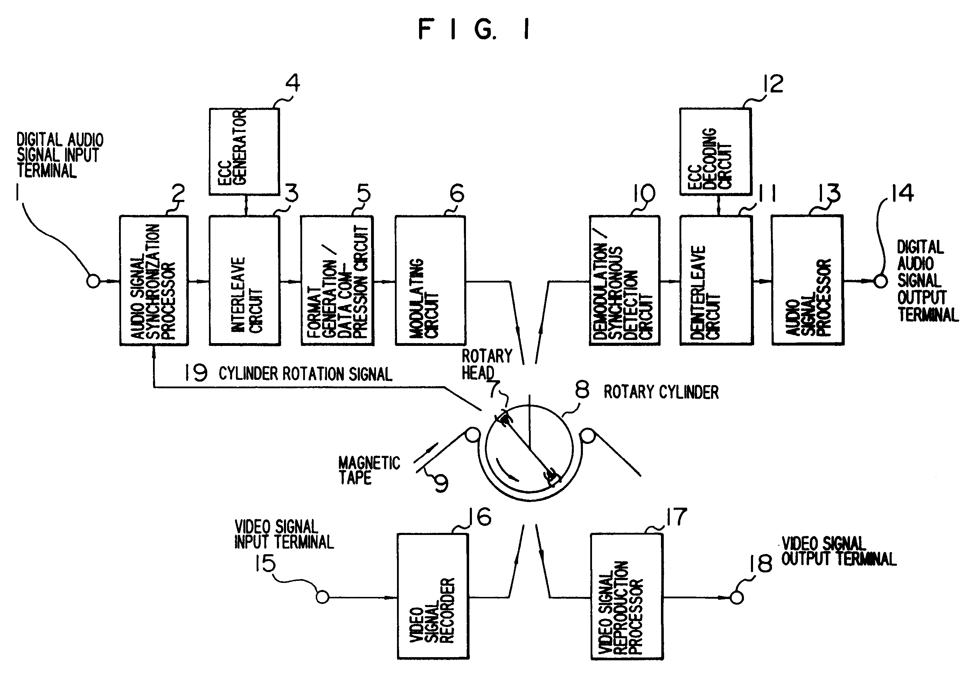

Fig. 1 is a block diagram showing a general arrangement of a VCR (Video Cassette Recorder) designed for performing digital audio recording/reproduction based on the digital audio signal recording/reproducing method according to an exemplary embodiment of the present invention.
In Fig. 1, a reference numeral 1 denotes a digital audio signal input terminal, 2 denotes an audio signal synchronization processor (means A set forth in claim 16), 3 denotes an interleave circuit (means B) for realizing interleave completed on a block basis, 4 denotes an ECC generator (means C) for generating error correction codes (hereinafter also referred to as ECC in abridgment), 5 denotes a format generation/data compression circuit, 6 denotes a modulating circuit, 7 denotes rotary heads, 8 denotes a rotary cylinder, 9 denotes a magnetic tape serving as a recording medium, 10 denotes a demodulation/synchronous detection circuit, 11 denotes a deinterleave circuit, 12 denotes an ECC decoding circuit, 13 denotes an audio signal processor, and a numeral 14 denotes a digital audio signal output terminal, wherein the format generation/data compression circuit 5, the modulator 6, the rotary heads 7 and the rotary cylinder 8 constitute means D set forth in claim 16. The circuit including a video signal input terminal 15, a video signal recorder 16, a video signal reproducing circuit 17 and a video signal output terminal 18 is of the configuration known heretofore.
In the following, description will be made of digital audio signal processing operation performed by the VCR implemented in the structure mentioned above.
The digital audio signal inputted to the digital audio signal input terminal 1 has already undergone the analogue-to-digital (A/D) conversion in compliance with the standardized specifications for the digital audio interface described hereinbefore. In the case of the instant embodiment of the invention, it is assumed that the digital audio input signal is a two-channel (left or L-channel and right or R-channel) stereophonic composite signal sampled at a sampling frequency of 48 KHz and linearly quantized in 16 bits. However, it goes without saying that the digital audio input signal may be of other standard specifications.
The digital audio signal applied through the digital audio signal input terminal 1 is first supplied to the audio signal synchronization processor 2 to undergo processing for establishing synchronism with the video signal. The digital audio signal inputted consecutively is segmented to be recorded with reference to the video signal by the rotating rotary heads 7. More specifically, the consecutive digital audio signal is divided into parts or segments each corresponding to one field period of the video signal, wherein each of the discrete digital audio signals resulting from the division and the corresponding video signal of one field are handled as the signals associated with each other on a time-serial basis. Each of the segmented digital audio signals is hereinafter referred to as one processing unit of the digital audio signal.
Supposing, by way of example, that the video signal is that of the 525-line/60-field system typified by the NTSC system, then the average sample number of the digital audio signal per field (for one channel), i.e. that of the one processing unit of the digital audio signal can be determined as follows:

5

$$48,000 \text{ (samples/sec.)} \div 59.94 \text{ Hz} \fallingdotseq 800.8 \text{ (samples/field)}$$

However, it is naturally expected that the rotational frequency of the rotary cylinder 8 contains error components due to jitter or the like, not to say of deviation or offset in the frequency between the video signal and the digital signal. Such being the circumstance, it is proposed according to an aspect of the present invention to prepare two field structures composed of such two different sample numbers around the average sample number which can facilitate implementation of the signal processing formats, and that either one of the field structures is selected for the recording by a cylinder rotation signal 19 indicating a rotational period of the rotary cylinder 8 for thereby performing the processing for establishing synchronism between the video signal and the digital audio signal. By way of example, the field having a greater capacity (sample number) than the average sample number (800.8) is assigned with 810 samples and referred to as the excess data field (mode 1), while the field having a smaller capacity (sample number) than the average sample number (800.8) is assigned with 792 samples and referred to as the diminished data field (mode 2). In that case, the diminished data field is additionally allocated with dummy data (e.g. of "Os") in a number corresponding to the difference in the data capacity (sample number) between the excess data field and the diminished data field, which dummy data is placed in succession to the 792 intrinsic data samples on a time-serial basis to thereby equalize the data capacity (sample number) to be recorded between both the fields.

In other words, the audio signal synchronization processor 2 segments the sample data of the digital audio signal inputted consecutively on a 810-sample basis (i.e. by the sample number of the excess data field) or on a 792-sample basis (i.e. by the sample number of the diminished data field) for recording on the magnetic tape 9 together with the video signal of one field through the rotary heads 7. At that time, the audio signal synchronization processor 2 detects a half frequency of the rotational frequency of the rotary cylinder 8 from the cylinder rotation signal 19. When the half-frequency is, for example, 59.94 Hz, this means that the digital audio signal advances (out of synchronism) about 10 samples relative to the video signal at the time when 810 samples has been recorded, because the average sample number of the digital audio signal (per channel) is 800.8 samples for one field of the video signal. Accordingly, for the succeeding digital audio signal, 792 samples are recorded for establishing the synchronism. Thus, by recording the digital audio signal with the sample number of 792 which is smaller than the average sample number about 10 samples, the digital audio signal is delayed about 10 samples relative to the video signal, whereby the synchronism with the video signal is established. When the rotational frequency of the rotaty cylinder 8 becomes instable due to the jitter or for other reasons, the average sample number of the digital audio signal (per channel) for one field of the video signal naturally becomes different from the sample number of 800.8. Accordingly, the audio signal synchronization processor 2 arithmetically determines from time to time the average sample number on the basis of the cylinder rotation number by making use of the cylinder rotation signal 19, to thereby select 810 samples (the excess-data field) or 792 samples (diminished-data field) mentioned above for thereby maintaining the synchronism with the video signal. For particulars of the synchronization processing to this end, reference may be made to U.S. Patent Application published under the No. US-A-4 852 102 or corresponding EP Application published under the No. EP-A-0 289 050, Korean Patent Application No. PA 88-4917 or Japanese Patent Application published under the No. JP-A-63 274 222. In this conjunction, it should be mentioned that even when the recording conditions such as, for example, the field frequency, the sampling frequency, the number of channels and others should vary, the optimal field structure can easily be determined on the basis of the same concept as elucidated above. Besides, discriminative identification of the field upon reproduction as to whether it is the excess data field or the diminished data field can readily be achieved by previously recording the corresponding identifier data in a header area of the field.

The digital audio signal undergone the processing for establishing synchronism with the video signal through the audio signal synchronization processor 3 is then loaded in the interleave circuit 3 which may be constituted by a random access memory (RAM) or the like. The data written in the interleave circuit or RAM 3 are read out therefrom in a predetermined sequence and added with the error correction code by the ECC coding circuit 4. The data output from the ECC coding circuit 4 is then sent to the format generation/data compression circuit 5 to be rearranged in a predetermined recording format and subsequently fed to the modulating circuit 6 to undergo a predetermined modulation, being finally recorded on the magnetic tape 9 through the rotary heads 7 mounted on the rotary cylinder 8. At the same time, the video signal inputted from the video signal input terminal 15 is converted into a predetermined signal recording form by the video signal recorder 16 to be subsequently recorded on the tape 9, being multiplexed with the digital audio signal.

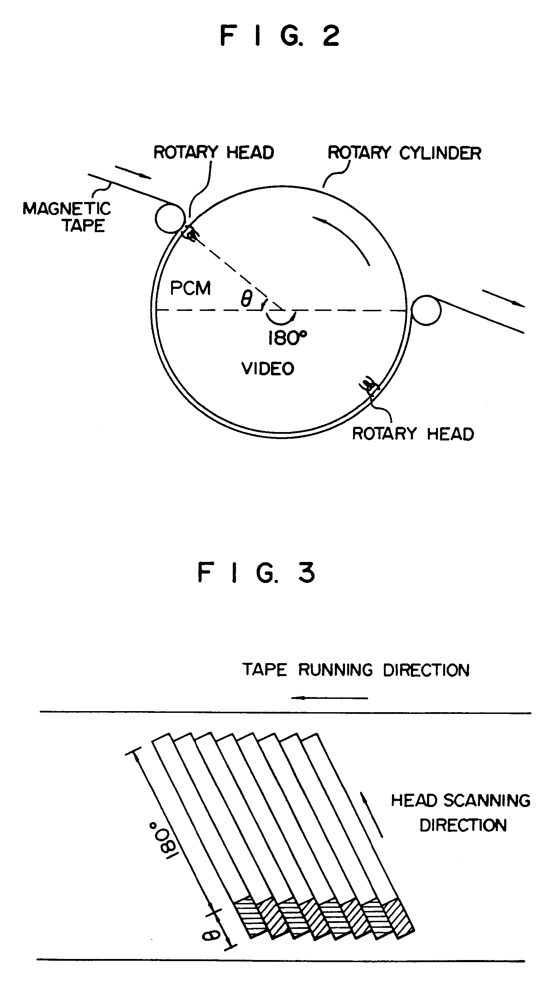

As the multiplexing method, there can be conceived among others the multiplexing based on angular division of the magnetic tape by increasing the wrap angle by $\theta°$ for the digital audio signal in addition to the wrap angle of 180° allocated for the recording of the video signal, as illustrated in Figs. 2 and 3, which is commonly adopted in the 8-mm VCR described hereinbefore. Of course, other multiplexing method such as, for example, frequency multiplexing track multiplexing such as guard band recording may be restored to.

Upon reproduction, the digital audio signal and the video signal recorded in multiplex are separated from each other after having been picked up by the rotary heads 7. The digital audio signal thus reproduced and separated undergoes predetermined demodulation processing through the demodulating/synchronous detection circuit 10 and is written in the deinterleave circuit 11 constituted by a RAM for restoring the interleaved data array to the original state. At the same time, the error correction and concealment of the demodulated digital audio signal is performed through the ECC decoding circuit 12. Subsequently, the dummy data added upon recording is eliminated to regain the digital audio data of the predetermined sampling sequence, which data is then outputted from the digital audio output terminal 14 in compliance with the predetermined standardization specifications. In parallel with the digital audio signal reproduction processing mentioned above, the video signal is subjected to reproduction processing through the video signal reproduction processor 17 to be subsequently outputted from the video signal output terminal 18.

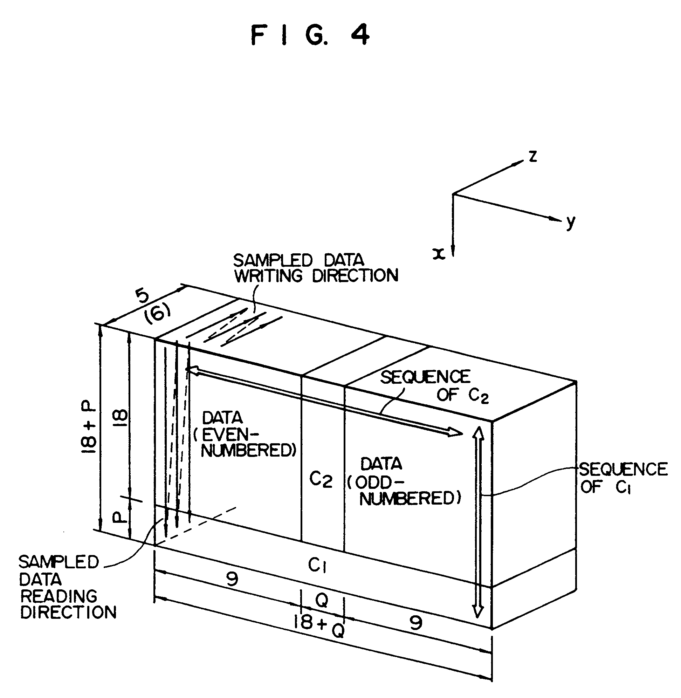

Now, description will be made in further detail of the digital audio signal recording/reproducing method according to the invention which can be carried out by the VCR implemented to perform the operation described above by referring to Figs. 4, 5 and 6.

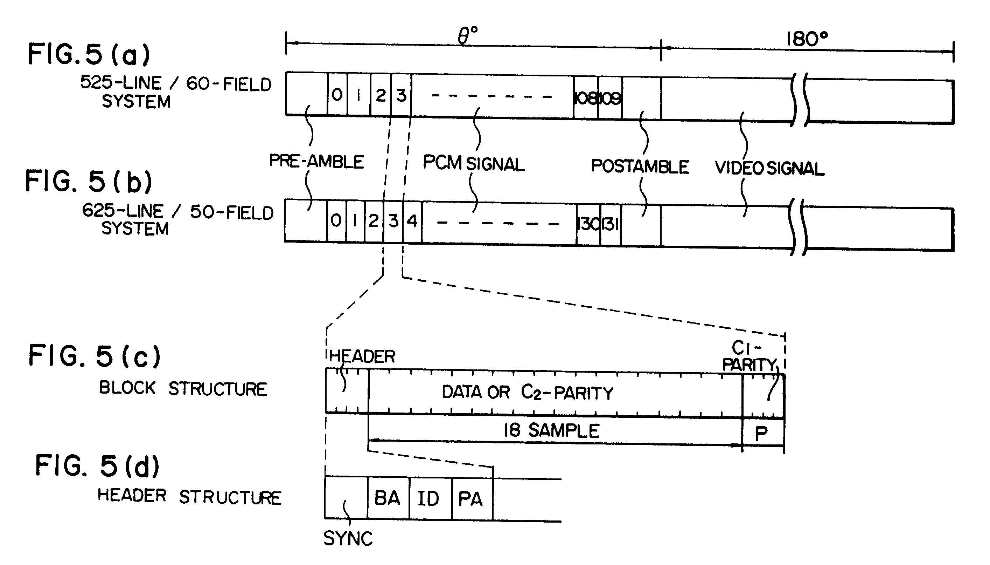

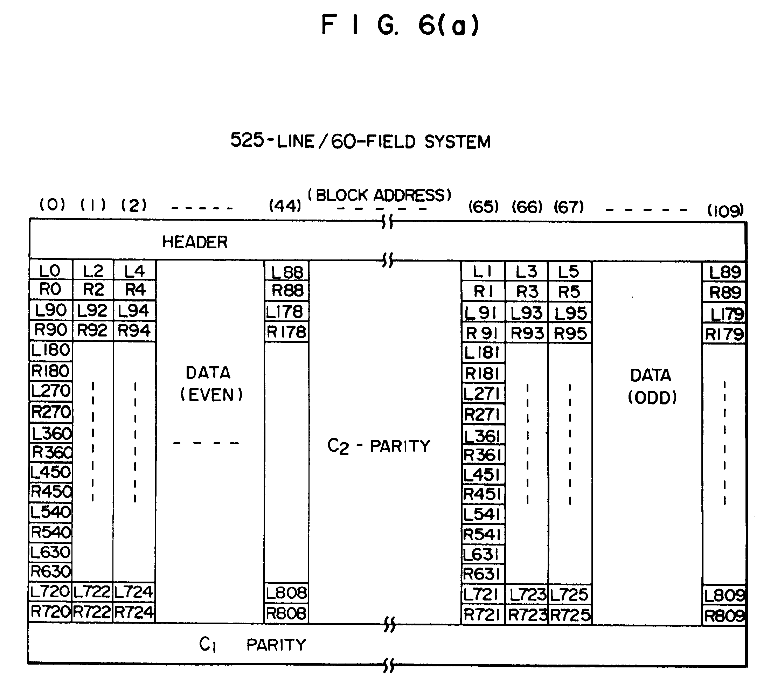

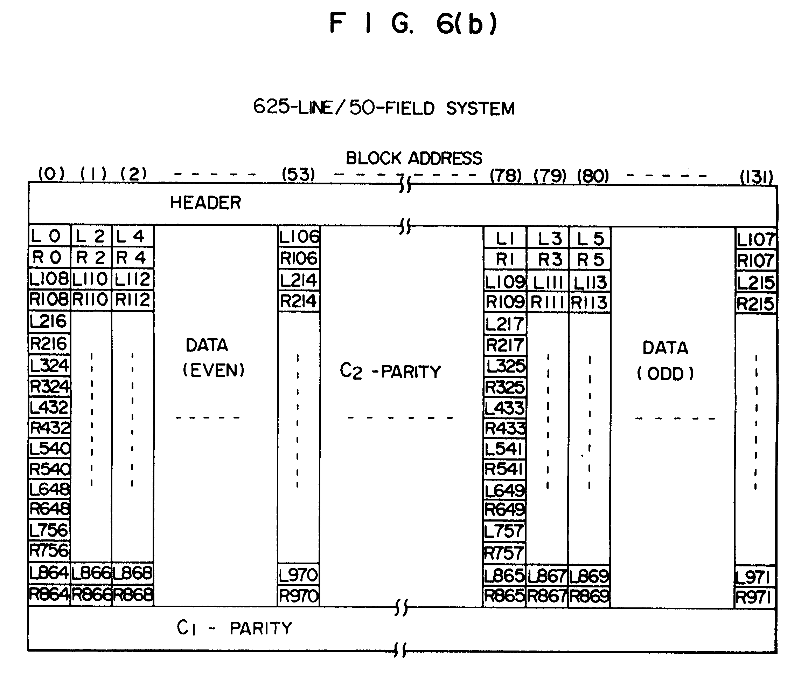

Fig. 4 is a schematic diagram showing a three-dimensional space (address space) for illustrating write/read directions of the sampled digital audio signal data to/from the RAM (interleave circuit) 3 according to the basic concept of the present invention, Fig. 5(a) to 5(d) are diagrams showing formats with which the data read out in the manner shown in Fig. 4 is recorded on the magnetic tape, and Figs. 6(a) and 6(b) show interleave formats for illustrating data arrays in the NTSC and CCIR television systems, respectively.

As mentioned previously, the television systems can be classified in view of the field frequency of the video signal into a 60 Hz-system of 525 lines and 60 fields represented by the NTSC television system (in the case of the NTSC color television system, the field frequency is 59.9 Hz) and a 50 Hz-system of 625 lines and 50 fields typified by the CCIR television systems such as PAL, SECAM and others.

The number of samples of the digital audio data sampled at the frequency of 48 KHz within one field period of the video signal is 800.8 samples (= 48,000/59.94) in the case of the NTSC system and 960 samples (= 48,000/50) in the case of the CCIR system. In consideration of the processing for establishing the synchronism with the video signal, there are selected such integral values which are each slightly greater than the sample numbers (800.8 and 960) for both the above-mentioned systems and which contain common divisions of both the sample numbers as many as possible and can facilitate the structurization of the signal processing formats for both the television systems. They are:

$$810 = 9 \times 18 \times 5 \text{ for the NTSC system, and}$$
$$972 = 9 \times 18 \times 6 \text{ for the CCIR system.}$$

Since the digital audio signal is actually a stereophonic signal of two channels complying with the standards, twice integral values conceived. Namely,

$$1620 = 18 \times 18 \times 5 \text{ for the NTSC system, and}$$
$$1944 = 18 \times 18 \times 6 \text{ for the CCIR system.}$$

It will be seen that the ratio of the above-mentioned values coincides with the ratio (5:6) of the field frequencies of the NTSC and CCIR systems. Accordingly, with the data structure mentioned above, there can be conceived such a three-dimensional data array in which a (18 x 18)-plane (X-Y plane in Fig. 4) is defined as the plane for the error correction code generation sequence. According to this concept, the switching sequence (Z-axis in Fig. 4) involved due to the difference in the television system and the error correction code generation sequence can be made independent of each other. More specifically, referring to Fig. 4, the second error correction code $C_2$ is generated from the data in the Y-axis direction of the three-dimensional array with a first error correction code $C_1$ being generated from the data in the X-axis direction (generation of the so-called product codes). It should be noted above all that the second error correction code $C_2$ is disposed at the mid position in the Y-axis direction of the three-dimensional space and that sequences of even-numbered sampled data and odd-numbered sampled data are separately disposed in precedence to and in succession to the second error correction code $C_2$, respectively. The disposition of the sampled data and the second correction code $C_2$ in this manner is advantageous in that the capability of correcting those data which are otherwise less susceptible to the error correction can be enhanced.

The sampled data of the digital audio signal inputted on the time-serial basis are written sequentially in the depthwise direction, in the horizontal direction and in the vertical direction in this order while the reading of the data is performed sequentially in the vertical direction, in the depthwise direction and in the horizontal directions in this order, as can be seen in Fig. 4. By virtue of the orthogonal intersection of the writing direction and the reading direction, there is realized the interleave which can make random the burst errors making appearance upon recording of the data on the magnetic tape and reproduction therefrom.

For recording the data on the magnetic tape 9, the data bits of the individual sample are read out in the X-axis direction shown in Fig. 4 and are added with a header containing a synchronizing signal (SYNC), a block address (BA), various auxiliary identifier signals (ID) and parities (PA) generated from the blcok address and the various auxiliary identifier signals to constitute a data structure on the block basis, while the field data is constitued from a predetermined number of the data blocks, as is shown in Figs. 5(a) and 5(b).

Figs. 6(a) and 6(b) show the details of the block structures in the NTSC and CCIR television systems, respectively.

Parenthetically, although the species or type of the error correction code is not specified in conjunction with the instant embodiment of the invention, it will readily be understood that the error correction code may be Read-Solomon code or other appropriate code, as in the case of the CD and DAT mentioned hereinbefore.

Similarly, the code lengths of the first and second error correction codes $C_1$ and $C_2$ are simply represented by P and Q in Fig. 4. It will however be appreciated that the code length can readily be determined in consideration of the desired error correcting capability as well as permissible redundancy and recording density.

Further, although the error correction code generating sequence is defined to be of (18 x 18) in the case of the example shown in Fig. 4, the invention is never restricted to any specific value. Important is to separate the error correction code generation sequence and the television system switching sequence from each other. By way of example, the error correction code generation sequence of (27 x 12) or (36 x 9) can be adopted in common between the NTSC and CCIR television systems which differ from each other in the error correction generation sequence, since the television system switching sequence is 5 and 6 for the NTSC and CCIR television systems.

In the foregoing description, it has been assumed that the sampling frequency is 48 KHz which is highest of the standardized sampling frequencies. It should however be understood that other sampling frequency of 44.1 KHz or 32 KHz may be handled similarly to the frequency of 48 KHz by adding blank data (substantially same as the dummy data, for example, of "Os") to thereby compensate for the difference from the frequency of 48 KHz. In this case, alteration of the sampling frequency requires no modification of the recording format and the recording density.

In other words, the following processing may be executed for the data locations allocated in the manners illustrated in Figs. 6(a) and 6(b).

1) For the excess data field
$0 \leq i \leq X_2 - 1$ : sampled data
$X_2 \leq i \leq Z - 1$ : blank data
(i = sample serial number in the interleave format)

2) For the diminished data field
$0 \leq i \leq X_1 - 1$ : sampled data
$X_1 \leq i \leq X_2 - 1$ : dummy data
$X_2 \leq i \leq Z - 1$: blank data

where

| TELEVISION SYSTEM | NTSC | | | CCIR | | |
|---|---|---|---|---|---|---|
| SAMPLING FREQUENCY (KHz) | 48 | 44.1 | 32 | 48 | 44.1 | 32 |
| $X_1$ | 792 | 728 | 528 | 948 | 872 | 632 |
| $X_2$ | 810 | 744 | 540 | 972 | 894 | 648 |
| Z | 810 | 810 | 810 | 972 | 972 | 972 |

In the case of the example illustrated in Fig. 4, the second error correction code $C_2$ is disposed at the center, being sandwiched between the odd-numbered data sequence and the even-numbered data sequence data with a view to enhancing the capability of correcting the data less susceptible to the correction. However, taking into consideration the fact that the instability of the rotary head characteristic on the tape entrance side is a phenomenon observed frequently, the second error correction code $C_2$ may be disposed on the tape entrance side, being followed by the disposition of the odd-numbered data sequence and the even-numbered data sequence.

## Claims

1. A rotary-head type digital audio signal recording method for recording a digital audio signal sampled at a predetermined sampling frequency together with a video signal by using rotary head means, comprising the steps of:

(a) segmenting the digital audio signal by a field period of the video signal into a predetermined number of data each constituting one processing unit;

(b) arraying sampled data of the digital audio signal of the processing unit in a three-dimensional space including M samples in the vertical direction, N samples in the horizontal direction and either 5 or 6 samples in the depthwise direction depending upon whether the television system is a 525 line-60 field system or a 625 line-50 field system, where M and N represent positive integers; and

(c) generating a first error correction code ($C_1$) from the data of the vertical direction while generating a second error correction code ($C_2$) from the data of the horizontal direction and disposing said first correction codes ($C_1$) at a rear position of the data sequence along a first axis and disposing said second error correction codes ($C_2$) at a mid position of the data sequence along a second axis perpendicular to the first axis, and said method being characterised by:

(d) reading said sampled data and first and second error correction codes ($C_1$ and $C_2$), such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order, to thereby record the sampled data as read out on a recording medium together with the video signal of one field.

2. A digital audio signal recording method according to claim 1, said audio signal being of two channels, wherein both sample numbers M and N are selected equal to 18, respectively.

3. A digital audio signal recording method according to claim 1, wherein said three-dimensional space is segmented into two halves in the horizontal direction, one of which is allocated for a time-serial sequence of even-numbered sampled data with the other half being allocated for a time-serial sequence of odd-numbered sampled data,

wherein said time-serial sequences of the even-numbered and odd-numbered sampled data are arrayed on a time-serial basis in the three-dimensional spaces allocated for the time-serial sequences of the even-numbered and odd-numbered sampled data, respectively, in the depthwise, horizontal and vertical directions in this order, being subsequently added with said first and second error correction codes ($C_1$ and $C_2$) to said three-dimensional space; and

wherein upon reading, the sampled data of the digital audio signal are read out from the three-dimensional spaces allocated for the time-serial sequences of the even-numbered sampled data and the odd-numbered sampled data, respectively, in the vertical, depthwise and horizontal directions in this order together with said first and second error correction codes ($C_1$ and $C_2$).

4. A digital audio signal recording method according to claim 1, wherein as a data capacity for said one processing unit, a capacity greater than the average number of the digital audio signal samples making appearance within one field period of the video signal is provided;

the number of data to be processed is selected around said average sample number, said data being classified into plural types of modes such that the number of data in each mode does not exceed the capacity of said processing unit; and

wherein synchronization processing for synchronizing the digital audio signal with the video signal is realized by changing over said modes with one another.

5. A digital audio signal recording method according to claim 4, said video signal being that of a 525-line/60-field system,

wherein as the data processing capacity for the one processing unit of the digital audio signal per channel sampled at a sampling frequency of 48 KHz, two modes of 810 samples (mode 1) and 792 samples (mode 2), respectively, are provided; and

wherein the processing for synchronizing the digital audio signal with the video signal is performed by changing over said two modes to each other in dependence on rotational periods of the rotary head system.

6. A digital audio signal recording method according to claim 4, said video signal being that of a 525-line/60-field system,

wherein as the data processing capacity for the one processing unit of the digital audio signal per channel sampled at a sampling frequency of 44.1 KHz, two modes of 744 samples (mode 1) and 728 samples (mode 2), respectively, are provided; and

wherein the processing for synchronizing the digital audio signal with the video signal is performed by changing over said two modes to each other in dependence on rotational periods of the rotary head system.

7. A digital audio signal recording method according to claim 4, said video signal being that of a 525-line/60-field system,

wherein as the data processing capacity for the one processing unit of the digital audio signal per channel sampled at a sampling frequency of 32 KHz, two modes of 540 samples (mode 1) and 528 samples (mode 2), respectively, are provided; and

wherein the processing for synchronizing the digital audio signal with the video signal is performed by changing over said two modes to each other in dependence on rotational periods of the rotary head system.

8. A digital audio signal recording method according to claim 4, said video signal being that of a 625-line/50-field system,

wherein as the data processing capacity for the one processing unit of the digital audio signal per channel sampled at a sampling frequency of 48 KHz, two modes of 972 samples (mode 1) and 948 samples (mode 2), respectively, are provided; and

wherein the processing for synchronizing the digital audio signal with the video signal is performed by changing over said two modes to each other in dependence on rotational periods of the rotary head system.

9. A digital audio signal recording method according to claim 4, said video signal being that of a 625-line/50-field system,

wherein as the data processing capacity for the one processing unit of the digital audio signal per channel sampled at a sampling frequency of 44.1 KHz, two modes of 894 samples (mode 1) and 872 samples (mode 2), respectively, are provided; and

wherein the processing for synchronizing the digital audio signal with the video signal is performed by changing over said two modes to each other in dependence on rotational periods of the rotary head system.

10. A digital audio signal recording method according to claim 4, said video signal being that of a 625-line/50-field system,

wherein as the data processing capacity for the one processing unit of the digital audio signal per channel sampled at a sampling frequency of 32 KHz, two modes of 648 samples (mode 1) and 632 samples (mode 2), respectively, are provided; and

wherein the processing for synchronizing the digital audio signal with the video signal is performed by changing over said two modes to each other in dependence on rotational periods of the rotary head system.

11. A rotary-head type digital audio signal reproducing method for reproducing a digital audio signal sampled at a predetermined sampling frequency and recorded together with a video signal, comprising steps of:

(a) reading the sampled data of the digital audio signal recorded on a recording medium along with first and second error correction codes ($C_1$ and $C_2$); and

(b) arraying the sampled data of the digital audio signal as read out in a three-dimensional space including M samples (M is a positive integer) in a horizontal direction, N samples (N is a positive integer) in the vertical direction, N samples in the horizontal direction and either 5 or 6 samples in the depthwise direction depending upon whether the television system is a 525 line-60 field system or a 625 line-50 field system, where M and N represent positive integers; and

said method being characterised by:

(c) reading said sampled data and first and second error correction codes ($C_1$ and $C_2$), such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order, said method being further characterised by:

(d) performing error correction/concealment on the sampled data of the digital audio signal with the first and second error correction codes ($C_1$, $C_2$) to thereby reproduce the original audio signal.

12. A digital audio signal reproducing method according to claim 11, said digital audio signal is of two channels, wherein both of said sample numbers M and N are selected to be equal to 18, respectively.

13. A digital audio signal reproducing method according to claim 11, wherein said three-dimensional space is segmented into two halves in the horizontal direction, one of which is allocated for a time-serial sequence of even-numbered sampled data with the other half being allocated for a time-serial sequence of odd-numbered sampled data, wherein said time-serial sequences of the even-numbered and odd-numbered sampled data are arrayed on a time-serial basis in the three-dimensional spaces allocated for the time-serial sequences of the even-numbered and odd-numbered sampled data, respectively, in the vertical, depthwise and horizontal directions in this order;

wherein upon reading, the sampled data of the digital audio signal are read out from the three-dimensional spaces for the time-serial sequence of the even-numbered sampled data and the time-serial sequence of the odd-numbered sampled data, respectively, in the depthwise, horizontal and vertical directions in this order.

14. A rotary-head type digital audio signal recording/reproducing method for recording/reproducing a digital audio signal sampled at a predetermined sampling frequency together with a video signal by using rotary head means, comprising steps of:

(a) segmenting the digital audio signal by a field period of the video signal into a predetermined number of data constituting one processing unit;

(b) preparing as data capacities of the one processing unit a first mode (mode 1) having a greater capacity than the average sample number of said digital audio signal within one field period of said video signal and a second mode (mode 2) having a smaller capacity than said average sample number;

(c) synchronizing said digital audio signal with said video signal by changing over said first and second modes to each other in dependence on the rotational periods of said rotary head means; and

(d) arraying the sampled data of said digital audio signal of the one processing unit in a three-dimensional space including M samples (M is a positive integer) in the vertical direction, N samples (N is a positive integer) in the horizontal direction and either 5 or 6 samples in the depthwise direction depending on whether the television system is a 525 line-60 field system or a 625 line-50 field system, and

(e) generating a first error correction code ($C_1$) from the data of the vertical direction while generating a second error correction code ($C_2$) from the data of the horizontal direction and disposing said first correction codes ($C_1$) at a rear position of the data sequence along a first axis and disposing said second error correction codes ($C_2$) at a mid position of the data sequence along a second axis perpendicular to the first axis, and said method being characterised by:

(f) reading said sampled data and first and second error correction codes ($C_1$ and $C_2$), such that the sampled data of the digital audio signal inputted on the time serial basis are written sequentially in the depthwise direction, in the horizontal direction and in the vertical direction in this order, whilst the reading of the data is performed sequentially in the vertical direction, in the depthwise direction and in the horizontal direction in this order, to thereby record the sampled data as read out on a recording medium together with the video signal of one field,

(g) upon reproduction, performing error correction/concealment processing on the sampled data of said digital audio signal with the aid of said first and second error correction codes ($C_1$ and $C_2$) to thereby reproduce the original digital audio signal.

15. A digital audio signal recording and reproducing method according to claim 14, said digital audio signal is of two channels, wherein both of said sample numbers M and N are selected to be equal to 18, respectively.

16. A digital audio signal recording apparatus for recording a digital audio signal together with a video signal comprising:

means (A: 2) for segmenting the digital audio signal inputted consecutively by a field period of the video signal;

means (B: 3) for arraying sampled data of the digital audio signals resulting from said division in an address space including M samples (M is a positive integer) in the vertical direction, N samples (N is a positive integer) in the horizontal direction and either 5 or 6 samples in the depthwise direction depending upon whether the television system is a 525 line-60 field system or a 625 line-50 field system; and,

means (C: 4) for generating a first error correction code ($C_1$) from the data arrayed in the vertical direction of said address space by said means (B: 3) while generating a second error correction code ($C_2$) from the data arrayed in the horizontal direction and disposing said first error correction codes ($C_1$) at a rear position of the data sequence along a first axis and disposing said second error codes at a mid position of the data sequence along a second axis perpendicular to the first axis, and characterised by:

means (D: 5, 6, 7, 8) for reading said sampled data and said first and second error correction codes ($C_1$ and $C_2$) from said address space such that the sampled data of the digital audio signal inputted on the time serial basis are written sequentially in the depthwise direction, in the horizontal direction and in the vertical direction in this order, while the reading of the data is performed sequentially in the vertical direction, in the depthwise direction and in the horizontal direction in this order, whereby the sampled data and the first and second correction signals can be recorded on the recording medium (9) together with the video signal of one field.

17. A digital audio signal recording apparatus according to claim 16, said digital audio signal is of two channels,

wherein both of said sample numbers M and N are selected to be equal to 18, respectively.


**Patentansprüche**

1. Verfahren zur Aufzeichnung eines digitalen Audiosignals mit einem drehbaren Kopf zur Aufzeichnung eines digitalen Audiosignals, welches bei einer vorbestimmten Abtastfrequenz gemeinsam mit einem Videosignal unter Verwendung von drehbaren Kopfeinrichtungen abgetastet wird, umfassend die Schritte:
(a) Unterteilen des digitalen Audiosignals durch eine Teilbildperiode des Videosignals in eine vorbestimmte Anzahl von Daten, welche jeweils eine Verarbeitungseinheit bilden;
(b) Anordnen der abgetasteten Daten des digitalen Audiosignals der Verarbeitungseinheit in einem dreidimensionalen Raum, umfassend M Abtastwerte in der vertikalen Richtung, N Abtastwerte in der horizontalen Richtung und entweder fünf oder sechs Abtastwerte in Richtung der Tiefe in Abhängigkeit davon, ob das Fernsehsystem ein 525-Zeilen/60-Teilbildsystem oder ein 625-Zeilen/50-Teilbildsystem ist, worin M und N positive, ganze Zahlen darstellen; und
(c) Erzeugen eines ersten Fehlerkorrekturcodes ($C_1$) von den Daten der vertikalen Richtung, während ein zweiter Fehlerkorrekturcode ($C_2$) aus den Daten der horizontalen Richtung erzeugt wird, und Anordnen dieser ersten Korrekturcodes ($C_1$) in einer rückwärtigen Position der Datensequenz entlang einer ersten Achse und Anordnen der zweiten Fehlerkorrekturcodes ($C_2$) in einer mittleren Position der Datensequenz entlang einer zweiten Achse normal auf die erste Achse, und wobei dieses Verfahren gekennzeichnet ist durch:
(d) Lesen dieser abgetasteten Daten und der ersten und zweiten Fehlerkorrekturcodes ($C_1$ und $C_2$), so daß die abgetasteten Daten des digitalen Audiosignals, welche auf der zeitlich seriellen Basis eingeben werden, sequentiell in der Richtung der Tiefe, in der horizontalen Richtung und in der vertikalen Richtung in dieser Reihenfolge geschrieben werden, während das Lesen der Daten sequentiell in der vertikalen Richtung, in der Richtung der Tiefe und in der horizontalen Richtung in dieser Reihenfolge durchgeführt wird, um dabei die abgetasteten Daten, wie sie ausgelesen werden, auf einem Aufzeichnungsmedium gemeinsam mit dem Videosignal eines Teilbildes aufzuzeichnen.

2. Verfahren zur Aufzeichnung eines digitalen Audiosignals nach Anspruch 1, welches Audiosignal zwei Kanäle umfaßt, worin beide Abtastwertanzahlen M bzw. N gleich 18 gewählt werden.

3. Verfahren zur Aufzeichnung eines digitalen Audiosignals nach Anspruch 1, worin der dreidimensionale Raum in zwei Hälften in der horizontalen Richtung unterteilt wird, von welchen eine für eine zeitlich serielle Sequenz von geradzahlig abgetasteten Daten zugeordnet wird, während die andere Hälfte für eine zeitlich serielle Sequenz von ungeradzahlig abgetasteten Daten zugewiesen wird;
worin diese zeitlich seriellen Sequenzen der geradzahlig und ungeradzahlig abgetasteten Daten auf einer zeitlich seriellen Basis in den dreidimensionalen Räumen, welche für die zeitlich seriellen Sequenzen von geradzahlig bzw. ungeradzahlig abgetasteten Daten in der Richtung der Tiefe, der horizontalen Richtung und der vertikalen Richtung in dieser Reihenfolge angeordnet werden, wobei in der Folge die ersten und zweiten Fehlerkorrekturcodes ($C_1$ und $C_2$) diesem dreidimensionalen Raum zugezählt werden; und wobei beim Lesen die abgetasteten Daten des digitalen Audiosignals aus den dreidimensionalen Räumen ausgelesen werden, welche für die zeitlich seriellen Sequenzen von den geradzahlig abgetasteten Daten bzw. den ungeradzahlig abgetasteten Daten in der vertikalen Richtung, in der Richtung der Tiefe und in der horizontalen Richtung in dieser Reihenfolge gemeinsam mit den ersten und zweiten Fehlerkorrekturcodes ($C_1$ und $C_2$) zugewiesen werden.

4.  Verfahren zur Aufzeichnung eines digitalen Audiosignals nach Anspruch 1, worin als eine Datenkapazität für diese eine Verarbeitungseinheit eine Kapazität vorgesehen wird, welche größer als die durchschnittliche Anzahl der digitalen Audiosignalabtastwerte, welche in einer Teilbildperiode des Videosignals aufscheinen, ist;
    die Anzahl der zu verarbeitenden Daten in der Größenordnung dieser durchschnittlichen Abtastwertanzahl gewählt wird, wobei Daten in mehrere Typen von Zuständen klassifiziert werden, so daß die Anzahl der Daten in jedem Zustand die Kapazität dieser Verarbeitungseinheit nicht übersteigt; und
    worin eine Synchronisierverarbeitung für das Synchronisieren des digitalen Audiosignals mit dem Videosignal durch Austauschen dieser Zustände miteinander durchgeführt wird.

5.  Verfahren zur Aufzeichnung eines digitalen Audiosignals nach Anspruch 4, wobei das Videosignal jenes eines 525-Zeilen/60-Teilbildsystems ist,
    worin als die Datenverarbeitungskapazität für die eine Verarbeitungseinheit des digitalen Audiosignals pro Kanal, welcher bei einer Abtastfrequenz von 48 kHz abgetastet wird, zwei Zustände von 810 Abtastwerten (Zustand 1) bzw. 792 Abtastwerten (Zustand 2) zur Verfügung gestellt werden und
    worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

6.  Verfahren zur Aufzeichnung eines digitalen Audiosignals nach Anspruch 4, wobei das Videosignal jenes eines 525-Zeilen/60-Teilbildsystems ist,
    worin als die Datenverarbeitungskapazität für die eine Verarbeitungseinheit des digitalen Audiosignals pro Kanal, welcher bei einer Abtastfrequenz von 44,1 kHz abgetastet wird, zwei Zustände von 744 Abtastwerten (Zustand 1) bzw. 728 Abtastwerten (Zustand 2) zur Verfügung gestellt werden und
    worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

7.  Verfahren zur Aufzeichnung eines digitalen Audiosignals nach Anspruch 4, wobei das Videosignal jenes eines 525-Zeilen/60-Teilbildsystems ist,
    worin als die Datenverarbeitungskapazität für die eine Verarbeitungseinheit des digitalen Audiosignals pro Kanal, welcher bei einer Abtastfrequenz von 32 kHz abgetastet wird, zwei Zustände von 540 Abtastwerten (Zustand 1) bzw. 528 Abtastwerten (Zustand 2) zur Verfügung gestellt werden und
    worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

8.  Verfahren zur Aufzeichnung eines digitalen Audiosignals nach Anspruch 4, wobei das Videosignal jenes eines 625-Zeilen/50-Teilbildsystems ist,
    worin als die Datenverarbeitungskapazität für die eine Verarbeitungseinheit des digitalen Audiosignals pro Kanal, welcher bei einer Abtastfrequenz von 48 kHz abgetastet wird, zwei Zustände von 972 Abtastwerten (Zustand 1) bzw. 948 Abtastwerten (Zustand 2) zur Verfügung gestellt werden und
    worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

9.  Verfahren zur Aufzeichnung eines digitalen Audiosignals nach Anspruch 4, wobei das Videosignal jenes eines 625-Zeilen/50-Teilbildsystems ist,
    worin als die Datenverarbeitungskapazität für die eine Verarbeitungseinheit des digitalen Audiosignals pro Kanal, welcher bei einer Abtastfrequenz von 44,1 kHz abgetastet wird, zwei Zustände von 894 Abtastwerten (Zustand 1) bzw. 872 Abtastwerten (Zustand 2) zur Verfügung gestellt werden und worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

10. Verfahren zur Aufzeichnung eines digitalen Audiosignals nach Anspruch 4, wobei das Videosignal jenes eines 625-Zeilen/50-Teilbildsystems ist, worin als die Datenverarbeitungskapazität für die eine Verarbeitungseinheit des digitalen Audiosignals pro Kanal, welcher bei einer Abtastfrequenz von 32 kHz abgetastet wird, zwei Zustände von 648 Abtastwerten (Zustand 1) bzw. 632 Abtastwerten (Zustand 2) zur Verfügung gestellt werden und worin das Verarbeiten zum Synchronisieren des digitalen Audiosignals mit dem Videosignal durch Austauschen dieser zwei Zustände miteinander in Abhängigkeit von Rotationsperioden des drehbaren Kopfsystems durchgeführt wird.

11. Verfahren zur Wiedergabe eines digitalen Audiosignals mit einem drehbaren Kopf zur Widergabe eines digitalen Audiosignals, welches bei einer vorbestimmten Abtastfrequenz abgetastet wurde und gemeinsam mit einem Videosignal aufgezeichnet wurde, umfassend die Schritte:

(a) Lesen der abgetasteten Daten des auf einem Aufzeichnungsmedium gemeinsam mit ersten und zweiten Fehlerkorrekturcodes ($C_1$ und $C_2$) aufgezeichneten Audiosignals; und

(b) Anordnen der abgetasteten Daten des digitalen Audiosignals, wie es ausgelesen wurde, in einem dreidimensionalen Raum, umfassend M Abtastwerte (M ist eine positive, ganze Zahl) in einer horizontalen Richtung und N Abtastwerte (N ist eine positive, ganze Zahl) in der vertikalen Richtung, N Abtastwerte in der horizontalen Richtung und entweder fünf oder sechs Abtastwerte in der Richtung der Tiefe in Abhängigkeit, ob das Fernsehsystem ein 525-Zeilen/60-Teilbildsystem oder ein 625-Zeilen/50-Teilbildsystem ist, worin M und N positive, ganze Zahlen sind; und wobei dieses Verfahren gekennzeichnet ist durch:

(c) Lesen der abgetasteten Daten und der ersten und zweiten Fehlerkorrekturcodes ($C_1$ und $C_2$), so die abgetasteten Daten des digitalen Audiosignals, welche auf einer zeitlich seriellen Basis eingegeben werden, sequentiell in der Richtung der Tiefe, in der horizontalen Richtung und in der vertikalen Richtung in dieser Reihenfolge geschrieben werden, während das Lesen der Daten sequentiell in der vertikalen Richtung, in der Richtung der Tiefe und in der horizontalen Richtung in dieser Reihenfolge durchgeführt wird, wobei dieses Verfahren weiters gekennzeichnet ist durch:

(d) Durchführen einer Fehlerkorrektur/Vergebens der abgetasteten Daten des digitalen Audiosignals mit den ersten und zweiten Korrekturcodes ($C_1$, $C_2$), um dadurch das originale Audiosignal zu reproduzieren.

12. Verfahren zur Wiedergabe eines digitalen Audiosignals nach Anspruch 11, welches digitale Audiosignal zwei Kanäle umfaßt, worin beide Abtastwertanzahlen M bzw. N gleich 18 gewählt werden.

13. Verfahren zur Wiedergabe eines digitalen Audiosignals nach Anspruch 11, worin der dreidimensionale Raum in der horizontalen Richtung in zwei Hälften unterteilt wird, von welchen eine für eine zeitlich serielle Sequenz von geradzahlig abgetasteten Daten zugeordnet wird, während die andere Hälfte für eine zeitlich serielle Sequenz von ungeradzahlig abgetasteten Daten zugeordnet wird, worin diese zeitlich seriellen Sequenzen der geradzahlig und ungeradzahlig abgetatsteten Daten auf einer zeitlich seriellen Basis in den dreidimensionalen Räumen, welche für die zeitlich seriellen Sequenzen der geradzahlig bzw. ungeradzahlig abgetasteten Daten zugeordnet wurden, in der vertikalen Richtung, in der Richtung der Tiefe und in der horizontalen Richtung in dieser Reihenfolge angeordnet werden; wobei beim Lesen die abgetasteten Daten des digitalen Audiosignals aus den dreidimensionalen Räumen für die zeitlich serielle Sequenz der geradzahlig abgetasteten Daten bzw. der zeitlich seriellen Sequenz der ungeradzahlig abgetasteten Daten in der Richtung der Tiefe, der horizontalen und der vertikalen Richtung in dieser Reihenfolge ausgelesen werden.

14. Verfahren zur Aufzeichnung/Wiedergabe eines digitalen Audiosignals mit einem rotierenden Kopf zum Aufzeichnen/Wiedergeben eines digitalen Audiosignals, welches in einer vorbestimmten Abtastfrequenz gemeinsam mit einem Videosignal unter Verwendung von rotierenden Kopfeinrichtungen abgetastet wurde, umfassend die Schritte:

(a) Unterteilen des digitalen Audiosignals durch eine Teilbildperiode des Videosignals in eine vorbestimmte Anzahl von Daten, welche eine Verarbeitungseinheit bilden;

(b) Ausbilden eines ersten Zustandes (Zustand 1) als Datenkapazitäten einer Verarbeitungseinheit, welcher eine größere Kapazität als die durchschnittliche Abtastwerteanzahl des digitalen Audiosignals in einer Teilbildperiode des Videosignals aufweist, und eines zweiten Zustandes (Zustand 2), welcher eine geringere Kapazität als die genannte durchschnittliche Abtastwerteanzahl aufweist;

(c) Synchronisieren des digitalen Audiosignals mit dem Videosignal durch Austauschen der ersten und zweiten Zustände miteinander in Abhängigkeit von den Rotationsperioden der rotierbaren Kopfeinrichtung; und

(d) Anordnen der abgetasteten Daten des digitalen Audiosignals der einen Verarbeitungseinheit in einem dreidimensionalen Raum, umfassend M Abtastwerte (M ist eine positive, ganze Zahl) in der vertikalen Richtung, N Abtastwerte (N ist eine positive, ganze Zahl) in der horizontalen Richtung und entweder fünf oder sechs Abtastwerte in der Richtung der Tiefe in Abhängigkeit davon, ob das Fernsehsystem ein 525-Zeilen/60-Teilbildsystem oder ein 625-Zeilen/50-Teilbildsystem ist; und

(e) Ausbilden eines ersten Fehlerkorrekturcodes ($C_1$) aus den Daten der vertikalen Richtung, während ein zweiter Fehlerkorrekturcode ($C_2$) aus den Daten der horizontalen Richtung gebildet wird, und Anordnen der ersten Korrekturcodes ($C_1$) in einer rückwärtigen Position der Datensequenz entlang einer ersten Achse und Anordnen der zweiten Fehlerkorrekturcodes ($C_2$) in einer mittleren Position der Datensequenz entlang einer zweiten Achse normal auf die erste Achse, und wobei dieses Verfahren gekennzeichnet ist durch:

(f) Lesen der abgetasteten Daten und der ersten und zweiten Fehlerkorrekturcodes ($C_1$ und $C_2$), so daß die abgetasteten Daten des digitalen Audiosignals, welche auf einer zeitlich seriellen Basis eingegeben wurden, sequentiell in der Richtung der Tiefe, in der horizontalen Richtung und in der vertikalen Richtung in dieser Reihenfolge geschrieben werden, während das Lesen der Daten sequentiell in der vertikalen Richtung, in der Richtung der Tiefe und in der horizontalen Richtung in dieser Reihenfolge durchgeführt wird, um die abgetasteten Daten, wie sie ausgelesen wurden, auf ein Aufzeichnungsmedium gemeinsam mit dem Videosignal eines Teilbildes aufzuzeichnen;

(g) bei Reproduktion Durchführen einer Fehlerkorrektur/Verbergungs-Verarbeitung an den abgetasteten Daten dieses digitalen Audiosignals mit der Hilfe der ersten und zweiten Fehlerkorrekturcodes ($C_1$ und $C_2$), um dadurch das ursprüngliche digitale Audiosignal zu reproduzieren.

15. Verfahren zur Aufzeichnung und Wiedergabe eines digitalen Audiosignals nach Anspruch 14, welches digitale Audiosignal zwei Kanäle umfaßt, worin beide der Abtastwerteanzahlen M bzw. N gleich 18 gewählt werden.

16. Vorrichtung zur Aufzeichnung eines digitalen Audiosignals zum Aufzeichnen eines digitalen Audiosignals gemeinsam mit einem Videosignal, umfassend:

eine Einrichtung (A: 2) zum Unterteilen des digitalen Audiosignals, welches aufeinanderfolgend durch eine Teilbildperiode des Videosignals eingegeben ist;

eine Einrichtung (B: 3) zum Anordnen der abgetasteten Daten der digitalen Audiosignale, welche aus der Teilung in einem Adressenraum, umfassend M Abtastwerte (M ist eine positive, ganze Zahl) in der vertikalen Richtung, N Abtastwerte (N ist eine positive, ganze Zahl) in der horizontalen Richtung und entweder fünf oder sechs Abtastwerte in der Richtung der Tiefe in Abhängigkeit, ob das Fernsehsystem ein 525-Zeilen/ 60-Teilbildsystem oder ein 625-Zeilen/50-Teilbildsystem ist; und

eine Einrichtung (C: 4) zum Bilden eines ersten Fehlerkorrekturcodes ($C_1$) von den in der vertikalen Richtung des Adreßraums durch die Einrichtung (B: 3) angeordneten Daten, während ein zweiter Fehlerkorrekturcode ($C_2$) aus den in der horizontalen Richtung angeordneten Daten gebildet wird, und zum Anordnen des ersten Fehlerkorrekturcodes ($C_1$) in einer rückwärtigen Position der Datensequenz entlang einer ersten Achse und zum Anordnen des zweiten Fehlerkorrekturcodes in einer mittleren Position der Datensequenz entlang einer zweiten Achse normal auf die erste Achse, gekennzeichnet durch:

Einrichtungen (D: 5, 6, 7, 8) zum Lesen der abgetasteten Daten und der ersten und zweiten Fehlerkorrekturcodes ($C_1$ und $C_2$) aus dem Adreßraum, so daß die abgetasteten Daten des digitalen Audiosignals, welche auf der zeitlich seriellen Basis eingegeben sind, sequentiell in der Richtung der Tiefe, in der horizontalen Richtung und in der vertikalen Richtung in dieser Reihenfolge eingeschrieben werden, während das Lesen der Daten sequentiell in der vertikalen Richtung, in der Richtung der Tiefe und in der horizontalen Richtung in dieser Reihenfolge durchgeführt wird, wodurch die abgetasteten Daten und die ersten und zweiten Korrektursignale auf dem Aufzeichnungsmedium (9) gemeinsam mit dem Videosignal eines Teilbildes aufgezeichnet werden können.

17. Vorrichtung zum Aufzeichnen eines digitalen Audiosignals nach Anspruch 16, welches digitale Audiosignal zwei Kanäle umfaßt, worin beide Abtastwerteanzahlen M bzw. N gleich 18 gewählt sind.

## Revendications

1. Procédé d'enregistrement de signaux audio numériques du type par tête tournante, pour l'enregistrement d'un signal audio numérique échantillonné à une fréquence d'échantillonnage prédétérminée en même temps qu'un signal vidéo par utilisation de moyens à tête tournante, comprenant les étapes consistant

(a) à échantillonner le signal audio numérique pour une période de trame du signal vidéo, en un nombre prédéterminé de données constituant chacune une unité de traitement;

(b) à ranger les données d'échantillonnage du signal audio numérique de l'unité de traitement dans un espace tridimensionnel contenant M échantillons dans la direction verticale, N échantillons dans la direction horizontale et 5 ou 6 échantillons dans la direction de la profondeur selon que le système de télévision est un système à 60 trames et 525 lignes ou un système à 50 trames et 625 lignes, M et N représentant des nombres entiers positifs; et

(c) à créer un premier code de correction d'erreurs ($C_1$) à partir des données de la direction verticale, tout en créant un second code de correction d'erreurs ($C_2$) à partir des données de la direction horizontale, à disposer ledit premier code de correction ($C_1$) dans une position à l'arrière de la suite de données le long d'un premier axe et à disposer ledit second code de correction d'erreurs ($C_2$) dans une position au milieu de la séquence de données le long d'un second axe perpendiculaire au premier axe,

ledit procédé étant caractérisé par l'étape consistant

(d) à lire lesdites données d'échantillonnage et lesdits premier et second codes de correction d'erreurs ($C_1$ et $C_2$), de sorte que les données d'échantillonnage du signal audio numérique, introduites en série dans le temps, soient écrites séquentiellement dans la direction de la profondeur, dans la direction horizontale et dans la direction verticale dans cet ordre, tandis que la lecture des données est effectuée séquentiellement dans la direction verticale, dans la direction de la profondeur et dans la direction horizontale dans cet ordre, de manière à enregistrer les données d'échantillonnage, telles qu'elles sont extraites, sur un support d'enregistrement en même temps que le signal vidéo relativement à une trame.

2. Procédé d'enregistrement de signaux audio numériques selon la revendication 1, ledit signal audio étant transmis par deux canaux, dans lequel les deux nombres d'échantillons M et N sont choisis égaux à 18 respectivement.

3. Procédé d'enregistrement de signaux audio numériques selon la revendication 1, dans lequel ledit espace tridimensionnel est partagé en deux moitiés dans la direction horizontale, dont l'une est affectée à une suite de données d'échantillonnage d'ordre pair en série dans le temps, l'autre moitié étant affectée à une suite de données d'échantillonnage d'ordre impair en série dans le temps,

dans lequel lesdites suites de données d'échantillonnage d'ordre pair et d'ordre impair en série dans le temps sont rangées en série dans le temps, dans les espaces tridimensionnels affectés respectivement aux suites de données d'échantillonnage d'ordre pair et d'ordre impair en série dans le temps, dans la direction de la profondeur, la direction horizontale et la direction verticale dans cet ordre, en étant ensuite ajoutées auxdits premier et second codes de correction d'erreurs ($C_1$ et $C_2$) dans ledit espace tridimensionnel; et

dans lequel, lors de la lecture, les données d'échantillonnage du signal audio numérique sont extraites des espaces tridimensionnels affectés respectivement aux suites de données d'échantillonnage d'ordre pair et de données d'échantillonnage d'ordre impair en série dans le temps, dans la direction verticale, la direction de la profondeur et la direction horizontale dans cet ordre, en même temps que lesdits premier et second codes de correction d'erreurs ($C_1$ et $C_2$).

4. Procédé d'enregistrement de signaux audio numériques selon la revendication 1, dans lequel il est prévu, comme nombre de données pour une desdites unités de traitement, un nombre supérieur au nombre moyen des échantillons de signal audio numérique survenant dans les limites d'une période de trame du signal vidéo;

le nombre de données à traiter est choisi aux alentours dudit nombre moyen d'échantillons, lesdites données étant classées en plusieurs types de modes de sorte que le nombre de données dans chaque mode ne dépasse pas le nombre de données de ladite unité de traitement; et

dans lequel un traitement destiné à synchroniser le signal audio numérique avec le signal vidéo est réalisé par permutation desdits modes entre eux.

5. Procédé d'enregistrement de signaux audio numériques selon la revendication 4, ledit signal vidéo étant celui d'un système à 60 trames et 525 lignes,

dans lequel il est prévu, comme capacité de traitement de données pour l'une desdites unités de traitement du signal audio numérique par canal échantillonné à une fréquence d'échantillonnage de 48 kHz, deux modes de 810 échantillons (mode 1) et de 792 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

6. Procédé d'enregistrement de signaux audio numériques selon la revendication 4, ledit signal vidéo étant celui d'un système à 60 trames et 525 lignes,

dans lequel il est prévu, comme capacité de traitement de données pour l'une desdites unités de traitement du signal audio numérique par canal échantillonné à une fréquence d'échantillonnage de 44,1 kHz, deux modes de 744 échantillons (mode 1) et de 728 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

7. Procédé d'enregistrement de signaux audio numériques selon la revendication 4, ledit signal vidéo étant celui d'un système à 60 trames et 525 lignes,

dans lequel il est prévu, comme capacité de traitement de données pour l'une desdites unités de traitement du signal audio numérique par canal échantillonné à une fréquence d'échantillonnage de 32 kHz, deux modes de 540 échantillons (mode 1) et de 528 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

8. Procédé d'enregistrement de signaux audio numériques selon la revendication 4, ledit signal vidéo étant celui d'un système à 50 trames et 625 lignes,

dans lequel il est prévu, comme capacité de traitement de données pour l'une desdites unités de traitement du signal audio numérique par canal échantillonné à une fréquence d'échantillonnage de 48 kHz, deux modes de 972 échantillons (mode 1) et de 948 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

9. Procédé d'enregistrement de signaux audio numériques selon la revendication 4, ledit signal vidéo étant celui d'un système à 50 trames et 625 lignes,

dans lequel il est prévu, comme capacité de traitement de données pour l'une desdites unités de traitement du signal audio numérique par canal échantillonné à une fréquence d'échantillonnage de 44,1 kHz, deux modes de 894 échantillons (mode 1) et de 872 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

10. Procédé d'enregistrement de signaux audio numériques selon la revendication 4, ledit signal vidéo étant celui d'un système à 50 trames et 625 lignes,

dans lequel il est prévu, comme capacité de traitement de données pour l'une desdites unités de traitement du signal audio numérique par canal échantillonné à une fréquence d'échantillonnage de 32 kHz, deux modes de 648 échantillons (mode 1) et de 632 échantillons (mode 2) respectivement; et

dans lequel le traitement pour la synchronisation du signal audio numérique avec le signal vidéo est effectué par permutation desdits deux modes entre eux, en fonction des périodes de rotation du système à tête tournante.

11. Procédé de reproduction de signaux audio numériques du type par tête tournante, pour la reproduction d'un signal audio numérique échantillonné à une fréquence d'échantillonnage prédétérminée et enregistré en même temps qu'un signal vidéo, comprenant les étapes consistant

(a) à lire les données d'échantillonnage du signal audio numérique enregistré sur un support d'enregistrement avec des premier et second codes de correction d'erreurs ($C_1$ et $C_2$);

(b) à ranger les données d'échantillonnage du signal audio numérique, telles qu'elles sont extraites, dans un espace tridimensionnel contenant M échantillons (M étant un nombre entier positif) dans la direction horizontale, N échantillons (N étant un nombre entier positif) dans la direction verticale, et 5 ou 6 échantillons dans la direction de la profondeur selon que le système de télévision est un système à 60 trames et 525 lignes ou un système à 50 trames et 625 lignes, M et N représentant des nombres entiers positifs;

ledit procédé étant caractérisé par l'étape consistant

(c) à lire lesdites données d'échantillonnage et lesdits premier et second codes de correction d'erreurs ($C_1$ et $C_2$), de sorte que les données d'échantillonnage du signal audio numérique, introduites en série dans le temps, soient écrites séquentiellement dans la direction de la profondeur, dans la direction horizontale et dans la direction verticale dans cet ordre, tandis que la lecture des données est effectuée séquentiellement dans la direction verticale, dans la direction de la profondeur et dans la direction horizontale dans cet ordre;

ledit procédé étant en outre caractérisé par l'étape consistant

(d) à effectuer une correction/dissimulation d'erreurs sur les données d'échantillonnage du signal audio numérique avec les premier et second codes de correction d'erreurs ($C_1$, $C_2$), de manière à reproduire le signal audio d'origine.

**12.** Procédé de reproduction de signaux audio numériques selon la revendication 11, ledit signal audio numérique étant transmis par deux canaux, dans lequel les deux nombres d'échantillons M et N sont choisis égaux à 18 respectivement.

**13.** Procédé de reproduction de signaux audio numériques selon la revendication 11, dans lequel ledit espace tridimensionnel est partagé en deux moitiés dans la direction horizontale, dont l'une est affectée à une suite de données d'échantillonnage d'ordre pair en série dans le temps, l'autre moitié étant affectée à une suite de données d'échantillonnage d'ordre impair en série dans le temps;

dans lequel lesdites suites de données d'échantillonnage d'ordre pair et d'ordre impair en série dans le temps sont rangées, en série dans le temps, dans les espaces tridimensionnels affectés respectivement aux suites de données d'échantillonnage d'ordre pair et d'ordre impair, en série dans le temps dans la direction verticale, la direction de la profondeur et la direction horizontale dans cet ordre; et

dans lequel, lors de la lecture, les données d'échantillonnage du signal audio numérique sont extraites des espaces tridimensionnels affectés respectivement à la suite des données d'échantillonnage d'ordre pair en série dans le temps et à la suite des données d'échantillonnage d'ordre impair en série dans le temps, dans la direction de la profondeur, la direction horizontale et la direction verticale dans cet ordre.

**14.** Procédé d'enregistrement/reproduction de signaux audio numériques du type par tête tournante, pour l'enregistrement/reproduction d'un signal audio numérique échantillonné à une fréquence d'échantillonnage prédétérminée, en même temps qu'un signal vidéo, à l'aide de moyens à tête tournante, comprenant les étapes consistant à:

(a) échantillonner le signal audio numérique, pour une période de trame du signal vidéo, en un nombre prédéterminé de données constituant une unité de traitement;

(b) préparer, comme nombre de données d'une desdites unités de traitement, un premier mode (mode 1) ayant un nombre de données supérieur au nombre moyen d'échantillons dudit signal audio numérique dans les limites d'une période de trame dudit signal vidéo, et un second mode (mode 2) ayant un nombre de données inférieur audit nombre moyen d'échantillons;

(c) synchroniser ledit signal audio numérique avec ledit signal vidéo par permutation desdits premier et second modes entre eux en fonction des périodes de rotation desdits moyens à tête tournante;

(d) ranger les données d'échantillonnage dudit signal audio numérique de l'une desdites unités de traitement dans un espace tridimensionnel contenant M échantillons (M étant un nombre entier positif) dans la direction verticale, N échantillons (N étant un nombre entier positif) dans la direction horizontale et 5 ou 6 échantillons dans la direction de la profondeur selon que le système de télévision est un système à 60 trames et 525 lignes ou un système à 50 trames et 625 lignes; et

(e) créer un premier code de correction d'erreurs ($C_1$) à partir des données de la direction verticale, tout en créant un second code de correction d'erreurs ($C_2$) à partir des données de la direction horizontale, à disposer ledit premiers code de correction d'erreurs ($C_1$) dans une position à l'arrière de la suite de données le long d'un premier axe et à disposer ledit second code de correction d'erreurs ($C_2$) dans une position au milieu de la suite de données le long d'un second axe perpendiculaire au premier axe;

ledit procédé étant caractérisé par les étapes consistant à :

(f) lire lesdites données d'échantillonnage et lesdits premier et second codes de correction d'erreurs ($C_1$ et $C_2$), de sorte que les données d'échantillonnage du signal audio numérique, introduites en série dans le temps, soient écrites séquentiellement dans la direction de la profondeur, dans la direction horizontale et dans la direction verticale dans cet ordre, tandis que la lecture des données est effectuée séquentiellement dans la direction verticale, dans la direction de la profondeur et dans la direction horizontale dans cet ordre, de manière à enregistrer les données d'échantillonnage, telles qu'elles sont extraites, sur un support d'enregistrement en même temps que le signal vidéo relativement à une trame;

(g) effectuer, à la reproduction, un traitement de correction/dissimulation d'erreurs sur les données d'échantillonnage dudit signal audio numérique à l'aide desdits premier et second codes de correction d'erreur ($C_1$ et $C_2$), de manière à reproduire le signal audio numérique d'origine.

**15.** Procédé d'enregistrement et de reproduction de signaux audio numériques selon la revendication 14, ledit signal audio numérique étant transmis par deux canaux, dans lequel les deux nombres d'échantillons M et N sont choisis égaux à 18 respectivement.

**16.** Appareil d'enregistrement de signaux audio numériques pour l'enregistrement d'un signal audio numérique en même temps qu'un signal vidéo, comprenant:

des moyens (A: 2) pour échantillonner le signal audio numérique appliqué consécutivement, pour une période de trame du signal vidéo;

des moyens (B: 3) pour ranger les données d'échantillonnage des signaux audio numériques résultant de ladite division d'un espace d'adresse contenant M échantillons (M étant un nombre entier positif) dans la direction verticale, N échantillons (N étant un nombre entier positif) dans la direction horizontale et 5 ou 6 échantillons dans la direction de la profondeur selon que le système de télévision est un système à 60 trames et 525 lignes ou un système à 50 trames et 625 lignes; et

des moyens (C: 4) pour créer un premier code de correction d'erreurs ($C_1$) à partir des données rangées dans la direction verticale dudit espace d'adresses par lesdits moyens (B: 3), tout en créant un second code de correction d'erreurs ($C_2$) à partir des données rangées dans la direction horizontale, et pour disposer ledit premier code de correction d'erreurs ($C_1$) dans une position à l'arrière de la suite de données le long d'un premier axe et disposer ledit second code de correction d'erreurs ($C_2$) dans une position au milieu de la suite de données le long d'un second axe perpendiculaire au premier axe;

caractérisé par

des moyens (D: 5, 6, 7, 8) pour lire lesdites données d'échantillonnage et lesdits premier et second codes de correction d'erreurs ($C_1$ et $C_2$) à partir dudit espace d'adresses, de sorte que les données d'échantillonnage du signal audio numérique introduites en série dans le temps soient écrites séquentiellement dans la direction de la profondeur, dans la direction horizontale et dans la direction verticale dans cet ordre, tandis que la lecture des données est effectuée séquentiellement dans la direction verticale, dans la direction de la profondeur et dans la direction horizontale dans cet ordre, ce qui fait que les données d'échantillonnage et les premier et second signaux de correction peuvent être enregistrés sur le support d'enregistrement (9) en même temps que le signal vidéo relativement à une trame.

**17.** Appareil d'enregistrement de signaux audio numériques selon la revendication 16, ledit signal audio numérique étant transmis par deux canaux,

dans lequel les deux nombres d'échantillons M et N sont choisis égaux à 18 respectivement.

FIG. 1

1 — DIGITAL AUDIO SIGNAL INPUT TERMINAL

2 — AUDIO SIGNAL SYNCHRONIZATION PROCESSOR

3 — INTERLEAVE CIRCUIT

4 — ECC GENERATOR

5 — FORMAT GENERATION / DATA COMPRESSION CIRCUIT

6 — MODULATING CIRCUIT

19 — CYLINDER ROTATION SIGNAL

8 — ROTARY CYLINDER

ROTARY HEAD

9 — MAGNETIC TAPE

10 — DEMODULATION / SYNCHRONOUS DETECTION CIRCUIT

11 — DEINTERLEAVE CIRCUIT

12 — ECC DECODING CIRCUIT

13 — AUDIO SIGNAL PROCESSOR

14 — DIGITAL AUDIO SIGNAL OUTPUT TERMINAL

15 — VIDEO SIGNAL INPUT TERMINAL

16 — VIDEO SIGNAL RECORDER

17 — VIDEO SIGNAL REPRODUCTION PROCESSOR

18 — VIDEO SIGNAL OUTPUT TERMINAL

# F I G. 2

ROTARY HEAD    ROTARY CYLINDER

MAGNETIC
TAPE

PCM

θ

180°

VIDEO

ROTARY HEAD

# F I G. 3

TAPE RUNNING DIRECTION

HEAD SCANNING
DIRECTION

180°

θ

# F I G. 4

FIG. 5 (a)
525-LINE / 60-FIELD SYSTEM

FIG. 5 (b)
625-LINE / 50-FIELD SYSTEM

FIG. 5 (c)
BLOCK STRUCTURE

FIG. 5 (d)
HEADER STRUCTURE

# F I G. 6(a)

## 525-LINE/60-FIELD SYSTEM

| (0) | (1) | (2) | - - - - | (44) | (BLOCK ADDRESS) - - - - | (65) | (66) | (67) | - - - - - | (109) |
|---|---|---|---|---|---|---|---|---|---|---|
| | | | HEADER | | | | | | | |
| LO | L2 | L4 | | L88 | | LI | L3 | L5 | | L89 |
| RO | R2 | R4 | | R88 | | RI | R3 | R5 | | R89 |
| L90 | L92 | L94 | | LI78 | | L91 | L93 | L95 | | LI79 |
| R90 | R92 | R94 | | RI78 | | R91 | R93 | R95 | | RI79 |
| L180 | | | DATA (EVEN) | L181 | | | DATA (ODD) | | | |
| R180 | | | | R181 | | | | | | |
| L270 | | | | L271 | | | | | | |
| R270 | | | | R271 | | | | | | |
| L360 | | | | $C_2$ - PARITY | L361 | | | | | |
| R360 | | | | R361 | | | | | | |
| L450 | | | | L451 | | | | | | |
| R450 | | | | R451 | | | | | | |
| L540 | | | | L541 | | | | | | |
| R540 | | | | R541 | | | | | | |
| L630 | | | | L631 | | | | | | |
| R630 | | | | R631 | | | | | | |
| L720 | L722 | L724 | | L808 | | L721 | L723 | L725 | | L809 |
| R720 | R722 | R724 | | R808 | | R721 | R723 | R725 | | R809 |
| | | | $C_1$ PARITY | | | | | | | |

EP 0 366 402 B1

# F I G. 6(b)

625-LINE/50-FIELD SYSTEM

BLOCK ADDRESS

| (0) | (1) | (2) | ----- | (53) | ---- | (78) | (79) | (80) | ----- | (131) |
|---|---|---|---|---|---|---|---|---|---|---|
| | | | HEADER | | | | | | | |
| L 0 | L 2 | L 4 | | L106 | | L1 | L3 | L5 | | L107 |
| R 0 | R 2 | R 4 | | R106 | | R1 | R3 | R5 | | R107 |
| L108 | L110 | L112 | | L214 | | L109 | L111 | L113 | | L215 |
| R108 | R110 | R112 | | R214 | | R109 | R111 | R113 | | R215 |
| L216 | | | | | | L217 | | | | |
| R216 | | | DATA | | | R217 | | | DATA | |
| L324 | | | (EVEN) | | C₂-PARITY | L325 | | | (ODD) | |
| R324 | | | | | | R325 | | | | |
| L432 | | | | | | L433 | | | | |
| R432 | | | | | | R433 | | | | |
| L540 | | | | | | L541 | | | | |
| R540 | | | | | | R541 | | | | |
| L648 | | | | | | L649 | | | | |
| R648 | | | | | | R649 | | | | |
| L756 | | | | | | L757 | | | | |
| R756 | | | | | | R757 | | | | |
| L864 | L866 | L868 | | L970 | | L865 | L867 | L869 | | L971 |
| R864 | R866 | R868 | | R970 | | R865 | R867 | R869 | | R971 |
| | | | C₁ - PARITY | | | | | | | |

EP 0 366 402 B1